# EUROPEAN PATENT APPLICATION

(11) **EP 4 668 384 A1**
(43) Date of publication of application: **24.12.2025**
(21) Application number: 24860080.1
(22) Date of filing: 12.06.2024
(51) Int. Cl.: H01M 10/04, H01M 50/105, B25J 11/00, B25J 15/06, B25J 15/00, B25J 15/02

(54) **METHOD AND APPARATUS FOR MANUFACTURING POUCH-TYPE BATTERY**

(30) Priority: 29.08.2023 KR 20230113838
(71) Applicant: LG Energy Solution, Ltd., Seoul 07335 (KR)
(72) Inventor: HWANG, Seung Jin, Daejeon 34122 (KR); OH, Jung Su, Daejeon 34122 (KR); KIM, Ki Su, Daejeon 34122 (KR); BAEK, Jeong Gyu, Daejeon 34122 (KR)
(74) Representative: Goddar, Heinz J.
(86) International application number: PCT/KR2024/008054
(87) International publication number: WO 2025/048156

(57) **Abstract**

The present invention relates to a pouch-type battery manufacturing device and a gripper used therein, and more specifically, relates to a battery manufacturing device and a gripper, which can perform an insertion process for a pouch and an electrode assembly more stably and efficiently while minimizing damage to the electrode assembly.

According to one example of the present invention, a pouch-type battery manufacturing method may be provided, which comprises: a pouch pickup step of picking up a pouch, in which an accommodation portion for inserting an electrode assembly is formed, using a gripper; a pouch cover step of moving the pouch downward to the upper portion of the electrode assembly using the gripper to insert the upper portion of the electrode assembly into the accommodation portion; an assembly pickup step of picking up the pouch and the electrode assembly together using the gripper; and a seating step of seating the pouch and the electrode assembly in an assembly station in a state where the electrode assembly is inserted into the accommodation portion of the pouch from the upper portion of the pouch by reversely moving the gripper up and down.

## Description

### Technical Field

The present invention relates to a pouch-type battery manufacturing device and a gripper used therein, and more specifically, relates to a battery manufacturing device and a gripper, which can perform an insertion process for a pouch and an electrode assembly more stably and efficiently while minimizing damage to the electrode assembly.

### Background Art

Secondary batteries are batteries capable of repeated use through a discharging process converting chemical energy into electrical energy and a charging process converting electrical energy into chemical energy.

Secondary batteries may include nickel-cadmium (Ni-Cd) batteries, nickel-hydrogen (Ni-MH) batteries, lithium-metal batteries, lithium-ion (Li-Ion) batteries, and lithium-ion polymer batteries (Li-Ion Polymer batteries, hereinafter referred to as "LIPB"), and the like.

Lithium secondary batteries have a cycle life of about 500 cycles or more and a short charging time of about 1 to 2 hours or so, and are lighter to the extent of about 30% to 40% or so compared to nickel-hydrogen batteries, thereby enabling weight saving, and have the highest voltage (30 to 37V) unit cell among existing secondary batteries, and excellent energy densities, so that they can have characteristics optimized for mobile devices.

Lithium secondary batteries can be provided as pouch-type secondary batteries by encapsulating a battery cell with a pouch which is an aluminum encapsulation material.

A pouch-type secondary battery can comprise an electrode assembly accommodated in a pouch, which is a sealant, a lead electrically connected to electrode tabs of electrodes provided in the electrode assembly and extended to the outside of the pouch, and an insulating film electrically insulating the lead.

The pouch is generally formed by a core material in the form of an aluminum thin plate and an insulating film coated on the upper and lower surfaces of the core material. The insulating film is generally a polypropylene (PP) film.

For inserting and accommodating the electrode assembly inside the film-shaped pouch therethrough, a forming process of the pouch may be performed. The forming process is a process for forming an accommodating portion into which the upper and lower parts of the electrode assembly are each inserted and accommodated. Cup-shaped accommodating portions may be formed on the left and right sides, respectively.

An insertion process that an electrode assembly is inserted and accommodated into the pouch in which the forming process has been completed may be performed, and then a sealing process of folding the pouch and sealing the edge portion may be performed.

To achieve mass production and a stable yield, a packaging process including an insertion process may be automatically performed.

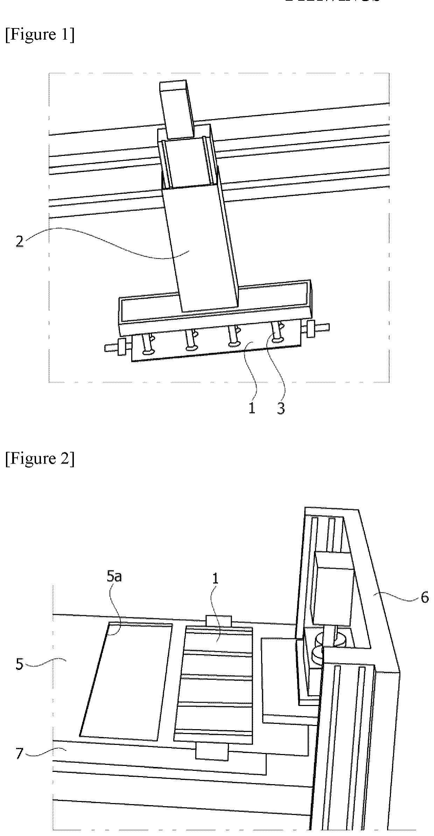

With reference to Figures 1 and 2, a conventional manufacturing device and a manufacturing method, particularly a manufacturing device and a manufacturing method, which perform an insertion process, will be described in detail.

The electrode assembly (1) that has been manufactured may be moved from the relevant station to an insertion station where the insertion process is performed. At this time, the electrode assembly (1) may be fixed by a picker (2), and then moved to another station. The picker (2) may be equipped with a plurality of adsorption nozzles (3), where the adsorption nozzles (3) adsorb the upper surface of the electrode assembly (1), and then move the electrode assembly (1) to the insertion station (7) illustrated in Figure 2.

As illustrated in Figure 2, a pouch (5) where an accommodation portion (5a) is formed may be positioned on the insertion station (7), and the electrode assembly (1) may be inserted and seated in the accommodation portion (5a) of the pouch at the insertion station (7).

The insertion station (7) may be equipped with a picker (6) for moving a pouch on which a forming process has been performed to the insertion station (7) or for moving the electrode assembly and pouch on which the insertion process has been completed to a subsequent process. As the picker (6) is equipped on the left and right sides of the pouch, respectively, it may stably adsorb and move the pouch.

As shown, each accommodation portion (5a) may be formed on the left and right sides of one pouch (5), and the lower part of the electrode assembly (1) may be inserted and seated into the right accommodation portion (5a), and then the upper part of the electrode assembly (1) may be inserted and seated into the left accommodation portion (5a) through a folding process.

The electrode assembly (1) is manufactured by laminating multiple negative electrodes, separators, and positive electrodes, and these must be closely attached up and down and laminated very precisely. That is, it is very important to ensure that the relative positions of the negative electrodes, separators, and positive electrodes are not misaligned.

However, as shown in Figures 1 and 2, when moving the electrode assembly (1) using the upper vacuum adsorption method, there is a risk of damage to the electrode assembly. Particularly, when moving a heavy electrode assembly (1), only the outermost separator is adsorbed, whereby there may be a problem that the remaining negative electrodes, separators, and positive electrodes slip with each other due to their own weights during the moving process to be misaligned.

In addition, after moving the electrode assembly by the upper vacuum adsorption method, the adsorption is released from the upper part of the pouch, and then the electrode assembly is inserted into the accommodation portion of the pouch. At this time, a drop impact may occur on the heavy electrode assembly (1), and thus there is a risk that misalignment of the lamination is caused, or damage to the edge of the electrode assembly (1) occurs.

Therefore, there is a need for a manufacturing device and a manufacturing method, which can perform an insertion process in which an electrode assembly is inserted and seated into an accommodation portion of a pouch stably and efficiently while effectively reducing damage to the electrode assembly (1).

### Disclosure

### Technical Problem

The present invention is intended to solve the conventional problems therethrough.

Through one example of the present invention, it is intended to provide a manufacturing device and a manufacturing method, which can reduce problems of an insertion process of an electrode assembly using an upper vacuum adsorption method.

Through one example of the present invention, it is intended to provide a manufacturing device and a manufacturing method, which can perform an insertion process efficiently and continuously using a gripper capable of self-gripping and a robot capable of moving and rotating the gripper with a high degree of freedom.

Through one example of the present invention, it is intended to provide a manufacturing device and a manufacturing method, which can fundamentally solve the problem, in which lamination between positive electrodes, separators, and negative electrodes is misaligned, capable of occurring upon movement of an electrode assembly, by supporting the self-weight of a heavy electrode assembly at the bottom and also moving the electrode assembly in a state where the electrode assembly is closely supported up and down.

Through one example of the present invention, it is intended to provide a manufacturing device and a manufacturing method, which can prevent, in an insertion process that an electrode assembly is inserted into an accommodation portion of a pouch, damage to the electrode assembly by eliminating dropping of the electrode assembly.

Through one example of the present invention, it is intended to provide a manufacturing device and a manufacturing method, which can significantly reduce, in an insertion process that an electrode assembly is inserted into an accommodation portion of a pouch, the required adsorption structure and capacity by adsorbing and transferring only the pouch rather than the electrode assembly.

### Technical Solution

To achieve the above-described objectives, according to one example of the present invention, a pouch-type battery manufacturing method may be provided, which comprises: a pouch pickup step of picking up a pouch, in which an accommodation portion for inserting an electrode assembly is formed, using a gripper; a pouch cover step of moving the pouch downward to an upper portion of the electrode assembly using the gripper to insert the upper portion of the electrode assembly into the accommodation portion; an assembly pickup step of picking up the pouch and the electrode assembly together using the gripper; and a seating step of seating the pouch and the electrode assembly in an assembly station in a state where the electrode assembly is inserted into the accommodation portion of the pouch from an upper portion of the pouch by reversely moving the gripper up and down.

The up and down reversal movement of the gripper may be performed between the seating step and the assembly pickup step and between the pouch pickup step and the pouch cover step.

The pouch pickup step may be performed at a pouch station into which the pouch is introduced, and the pouch cover step may be performed at an electrode station into which the electrode assembly is introduced.

It is preferable that the gripper is provided to be movable and reversely movable between the pouch station, the electrode station, and the assembly station.

It is preferable that the gripper is an end effector provided at a terminal of a multi-jointed robot.

It is preferable that in the pouch pickup step, the pouch is adsorbed through a vacuum adsorption nozzle provided on a pouch gripper of the gripper.

It is preferable that in the assembly pickup step, a cell gripper of the gripper supporting the electrode assembly from a lower portion is moved in the direction of a pouch gripper to support the pouch and the electrode assembly up and down. Through this, the pouch and the electrode assembly are firmly fixed inside the gripper, and the firm fixation may be continuously maintained despite the movement and reverse rotation of the gripper.

To achieve the above-described objectives, according to one example of the present invention, a pouch-type battery manufacturing device may be provided, which comprises a multi-jointed robot and a gripper provided at a terminal of the multi-jointed robot, and is characterized in that the gripper comprises: a pouch gripper adsorbing a pouch in which an accommodation portion is formed; a cell gripper provided to be spaced apart from the pouch gripper up and down so that an electrode assembly is inserted into the gripper and supporting a lower surface of the electrode assembly; and a coupling gripper connecting the pouch gripper and the cell gripper and provided to be coupled with the terminal of the multi-jointed robot, and the gripper is flipped up and down after the electrode assembly is inserted into the accommodation portion of the pouch between the pouch gripper and the cell gripper and fixed.

Here, the movement and the up and down reverse rotation of the entire gripper may be performed through the multi-joint robot.

The pouch gripper may adsorb the pouch so that the accommodation portion points downward, and may move the pouch downward to the top of the electrode assembly so that the electrode assembly is inserted into the accommodation portion.

When the electrode assembly is inserted into the accommodation portion, the cell gripper may move the electrode assembly from the bottom to the top to closely attach and fix both up and down in a state where the electrode assembly is inserted into the accommodation portion. In this state, the entire gripper may move backward, or move upward and then backward.

It is preferable that the cell gripper is provided to be movable with respect to the coupling gripper so that an up and down separation interval is increased or decreased from the pouch gripper.

It is preferable that the pouch gripper is fixed with respect to the coupling gripper.

It is preferable that the pouch gripper and the cell gripper are provided in parallel. That is, the pouch gripper and the cell gripper are provided to face each other, where the cell gripper may move to be closer to or further away from the pouch gripper.

It is preferable that the gripper comprises a linear moving device driving the cell gripper to move. The linear moving device can be regarded as a separate drive device from the multi-jointed robot.

It is preferable that the linear moving device is provided to the coupling gripper. Therefore, the linear moving device may be moved integrally with the coupling gripper and the entire gripper.

It is preferable that the gripper is moved integrally with the movement of the terminal of the multi-jointed robot. In addition, it is preferable that the gripper is rotatable through the terminal of the multi-jointed robot. It is preferable that the gripper is rotated based on the extension direction or length direction of the pouch gripper and the cell gripper.

It is preferable that the pouch gripper comprises a plurality of extension portions having a predetermined interval from each other and extended from the coupling gripper. The extension portions are formed like prongs or teeth of a fork structure, so that gaps may be formed between the extension portions.

It is preferable that a plurality of adsorption nozzles is provided in an extension length direction of the plurality of extension portions.

It is preferable that the cell gripper comprises a plurality of extension portions having a predetermined interval from each other and extended from the coupling gripper.

It is preferable that the extension length of the extension portion of the cell gripper is smaller than the extension length of the extension portion of the pouch gripper. This is because the area of the pouch is larger than the area of the electrode assembly.

The pouch-type battery manufacturing device may comprise an electrode station on which the electrode assembly is supported before the electrode assembly is coupled with the gripper.

The electrode station may comprise a plurality of extension portions spaced apart from each other at a predetermined interval along the length direction of the electrode assembly. The extension portion may be provided on an upper portion of a support of the electrode station. In particular, the extension portion may be extended and formed from the upper portion of the support in the width direction of the electrode assembly.

The extension portion of the cell gripper may be formed to be penetrable between the extension portions of the electrode station up and down.

The electrode assembly is placed on the upper portion of the extension portion of the electrode station, whereby the extension portion of the electrode station may support the electrode assembly at a predetermined interval along the width direction. That is, the extension portion of the cell gripper may partially or completely penetrate the gap between the extension portions of the electrode station from the bottom to the top. Through this, the cell gripper may separate the electrode assembly from the extension portion of the electrode station to support it.

The assembly station and the pouch station may also be formed with the same or similar structure as that of the electrode station.

Therefore, the pickup and seating of the object through the gripper may be performed by the same mechanism.

It is preferable that the gripper is formed to be open on the left or right and the front so that the pouch and the electrode assembly are insertable inside the gripper in the left or right direction or the front direction. Therefore, to position the pouch or electrode assembly inside the gripper through the drive of the multi-jointed robot, various drive motions of the multi-jointed robot may be applied.

The multi-jointed robot may be provided to perform an insertion drive for moving the electrode assembly or pouch to be positioned inside the gripper; a seating drive for moving the pouch to be seated on the upper surface of the electrode assembly; and a reverse drive for reversing the gripper up and down.

The reverse drive of the gripper may also be performed in a state where the electrode assembly and the pouch are inserted and connected to each other, and may also be performed in a state before the pouch is adsorbed and then coupled with the electrode assembly.

In order to achieve the above-described objectives, according to one example of the present invention, a gripper for a pouch-type battery manufacturing device may be provided, which is characterized in that it comprises: a pouch gripper adsorbing a pouch, in which an accommodation portion is formed, to seat it on an upper surface of an electrode assembly; a cell gripper provided to be spaced apart from the pouch gripper up and down and supporting a lower surface of the electrode assembly; a coupling gripper connecting the pouch gripper and the cell gripper; and a linear moving device driving the pouch gripper so that a spaced distance between the pouch gripper and the cell gripper is increased or decreased, and the pouch gripper, the cell gripper, the coupling gripper, and the linear moving device are provided to be moved integrally by a gripper moving device coupled to the coupling gripper.

The gripper may be connected to a multi-jointed robot, as one example, a collaborative robot, thereby moving and rotating in three dimensions while having a very high degree of freedom.

The pouch gripper may adsorb the pouch so that the accommodation portion points downward, and the electrode assembly may be inserted into the accommodation portion from the bottom to the top through the downward movement of the pouch gripper.

It is preferable that the gripper is provided to rotate for the up-and-down reversal of the pouch and the electrode assembly in a state where the insertion of the electrode assembly into the accommodation portion is completed. Of course, it is preferable that the up-and-down reversal rotation of the gripper is performed after the gripper leaves the electrode station where the electrode assembly is positioned.

The gripper may reverse up and down through rotation based on the vertical axis with respect to the coupling gripper. The coupling gripper may be provided to extend in the vertical direction, and may be connected to the pouch gripper at the top and may be connected to the cell gripper at the bottom.

Therefore, the gripper rotates based on the vertical axis direction, that is, the horizontal direction, with respect to the coupling gripper, whereby the up-and-down reversal of the entire gripper may be performed.

It is preferable that the pouch gripper and the cell gripper each comprise a plurality of extension portions having a predetermined interval from each other and extended from the coupling gripper, and extension portions of the pouch gripper and extension portions of the cell gripper are formed to be overlapped up and down.

That is, it is preferable that extension portions of the pouch gripper and extension portions of the cell gripper each have a fork shape, but do not intersect up and down. This is because the electrode assembly and the pouch which are inserted and coupled through extension portions of the pouch gripper and extension portions of the cell gripper are simultaneously supported. Therefore, the electrode assembly and the pouch are fixed simultaneously through the support lines or support points facing each other, so that misalignment of the electrode assembly due to the deviation of the support lines or support points can be prevented and it can be stably supported.

### Advantageous Effects

Through one example of the present invention, it is possible to provide a manufacturing device and a manufacturing method, which can solve problems of an insertion process of an electrode assembly using an upper vacuum adsorption method.

Through one example of the present invention, it is possible to provide a manufacturing device and a manufacturing method, which can perform an insertion process efficiently and continuously using a gripper capable of self-gripping and a robot capable of moving and rotating the gripper with a high degree of freedom.

Through one example of the present invention, it is possible to provide a manufacturing device and a manufacturing method, which can fundamentally solve the problem, in which lamination between positive electrodes, separators, and negative electrodes is misaligned, capable of occurring upon movement of an electrode assembly, by supporting the self-weight of a heavy electrode assembly at the bottom and closely supporting it up and down as well.

Through one example of the present invention, it is possible to provide a manufacturing device and a manufacturing method, which can economically manufacture a pouch-type secondary battery, by using a single collaborative robot in which a reference point or a support portion is fixed and the terminal is optionally movable in a three-dimensional space, and allowing a gripper sequentially to approach a pouch station, an electrode station, and a folding station sequentially.

Through one example of the present invention, it is possible to provide a manufacturing device and a manufacturing method, capable of reducing the number of pickers for movement of an electrode assembly or a pouch, or the number of stations on which an electrode assembly or a pouch is placed.

Through one example of the present invention, it is possible to provide a manufacturing device and a manufacturing method, which can significantly reduce, in an insertion process that an electrode assembly is inserted into an accommodation portion of a pouch, the required adsorption structure and capacity by adsorbing and transferring only the pouch rather than the electrode assembly.

### Description of Drawings

Figure 1 illustrates an appearance in which an electrode assembly is adsorbed to insert the electrode assembly into a pouch in a conventional manufacturing device,
Figure 2 illustrates an appearance in which an electrode assembly is inserted into a pouch in a conventional manufacturing device,
Figure 3 illustrates an appearance in which a manufacturing device according to one example of the present invention is viewed from above,
Figure 4 illustrates an appearance in which a manufacturing device according to one example of the present invention is viewed from the side,
Figure 5 illustrates a state in which a gripper moves to insert an electrode assembly into the gripper,
Figure 6 illustrates a state in which a gripper moves, and thus an electrode assembly is inserted inside,
Figure 7 illustrates a state in which a gripper moves downward, and thus an electrode assembly is inserted into a pouch,
Figure 8 illustrates a state in which a cell gripper moves upward, and thus an electrode assembly and a pouch are fixed to the gripper,
Figure 9 illustrates a state in which a gripper reversely rotates up and down, and thus an electrode assembly is inserted and fixed on the top of a pouch, and
Figure 10 illustrates detailed steps of an insertion process of an electrode assembly and a pouch using a gripper.

### Best Mode

Hereinafter, a gripper according to one example of the present invention and a pouch-type battery manufacturing device comprising the same will be described in detail with reference to the attached drawings.

The manufacturing device in this example may be a manufacturing device performing an insertion process of a packaging process of an electrode assembly and a pouch.

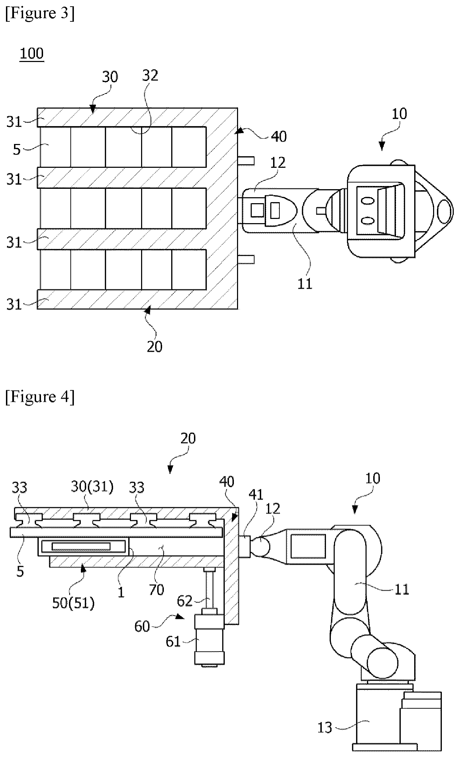

Figure 3 illustrates an appearance in which a manufacturing device according to one example of the present invention is viewed from above, and Figure 4 illustrates an appearance in which a manufacturing device according to one example of the present invention is viewed from the side.

The manufacturing device (100) may comprise a gripper (20). More specifically, the manufacturing device (100) may comprise a gripper moving device (10).

The gripper (20) may be provided to be capable of adsorbing and transferring a pouch (5). In addition, the gripper (20) may be provided to transfer an electrode assembly (1). Here, it is preferable that the gripper (20) is provided to transfer the electrode assembly (1) in a state of supporting the electrode assembly (1) from below, rather than transfer of the electrode assembly (1) by adsorption.

In addition, the gripper (20) may be provided to insert the electrode assembly (1) into the accommodation portion (5a, see Figure 2) of the pouch (5) by itself. Particularly, the electrode assembly (1) may not be inserted into the accommodation portion (5a) from the top to the bottom, but may be inserted into the accommodation portion (5a) from the bottom to the top. In other words, by covering the pouch (5) from the top of the placed electrode assembly, the electrode assembly may be inserted into the accommodation portion (5a) of the pouch.

Therefore, according to the gripper (20), the upper adsorption and movement of the electrode assembly (1) is excluded. In addition, according to the gripper (20), it is excluded that the electrode assembly (1) is dropped downward and inserted thereto. Through this, it is possible to prevent damage to the electrode assembly effectively and efficiently in the movement and insertion process of the electrode assembly.

When the electrode assembly (1) is subjected to upper adsorption and movement, an adsorption structure and capacity that can overcome the self-weight of the electrode assembly (1) are required. According to the gripper (20), the pouch may be moved to the top. Therefore, while the required adsorption structure may be simplified, the adsorption capacity may also be implemented very small.

Specifically, the gripper (20) may be formed by comprising a pouch gripper (30), a coupling gripper (40), and a cell gripper (50).

The pouch gripper (30), the coupling gripper (40), and the cell gripper (50) may form one gripper (20) as one assembly. In addition, as described below, the gripper (20) may be moved integrally by the gripper moving device (10).

The pouch gripper (30) and the cell gripper (50) may be positioned up and down to be horizontal to each other. An open space (70) may be provided between the pouch gripper (30) and the cell gripper (50). In the open space (70), the pouch adsorbed by the pouch gripper (30) may be positioned, and an electrode assembly (1) with the bottom supported by the cell gripper (50) may be positioned.

More specifically, it is preferable that the space (70) is opened so that the pouch (5) and the electrode assembly may be inserted into the space (70) through the front and the left or right. That is, the path through which the pouch (5) and the electrode assembly may be inserted into the space (70), i.e., the degree of freedom of movement, may be increased through such an opening. However, the rear of the space (70) may be blocked by the coupling gripper (40).

The coupling gripper (40) may perform a frame function in which the pouch gripper (30) and the cell gripper (50) are supported. In addition, the gripper (20) may be coupled with the gripper moving device (10) through the coupling gripper (40).

As illustrated, the coupling gripper (40) may be formed in a vertically erected plate shape. The pouch gripper (30) may be provided by extending from the upper portion of the coupling gripper (40), and the cell gripper (50) may be provided by extending from the lower portion of the coupling gripper (40).

Specifically, the pouch gripper (30) may comprise a plurality of extension portions (31). The respective extension portions (31) may be spaced apart from each other to have a predetermined interval. That is, the extension portion (31) may be provided to be spaced apart from an adjacent extension portion in a direction perpendicular to the extension direction. That is, upper and lower opening portions (32) may be formed between the extension portions (31).

The pouch gripper (30) having such extension portions (31) may be regarded as having a fork shape. Figure 3 illustrates one example of a fork having four prongs or teeth. The upper and lower opening portions (32) between the prongs of the fork may form a passage through which the prongs of another fork may cross each other up and down. That is, the fork-shaped structures may be crossed up and down in a state where they are staggered to each other.

A plurality of adsorption nozzles (33) may be provided on the lower surface of the pouch gripper (30). Specifically, the plurality of adsorption nozzles (33) may be provided along the length direction of the extension portion (31). Therefore, the area for adsorbing the pouch (5) may be expanded totally through the plurality of adsorption nozzles (33).

The pouch gripper (30) may be provided to adsorb the upper surface of the pouch (5) after approaching the station where the pouch (5) is placed. Here, it is preferable that the accommodation portion (5a) of the pouch (5) points downward.

In general, after a forming process of forming an accommodation portion in a pouch, the pouch may be placed on the station so that the accommodation portion points upward. Therefore, the matter that the pouch is turned over so that the pouch accommodation portion points downward, and then adsorbed with the pouch gripper (30) may require additional devices and processes. However, this may be performed effectively and easily through the features of the fork-shaped pouch gripper (30) and the movement and rotation features of the gripper (20) using the gripper moving device (10). This is because the pouch gripper (30) may adsorb the lower surface of the pouch in a state where the pouch accommodation portion points upward, and then reverse the pouch up and down. Details on this will be described below.

The cell gripper (50) may be provided in parallel with the pouch gripper (30), where a spaced distance or a space is formed between the cell gripper (50) and the pouch gripper (30).

Here, it is preferable that to reduce or increase the interval between the cell gripper (5 0) and the pouch grippers (30), the cell gripper (50) is movable. More specifically, it is preferable that the cell gripper (50) is linearly moved closer to the pouch gripper (30), and conversely, it is linearly moved away therefrom.

Specifically, it is preferable that the pouch gripper (30) is fixed with respect to the coupling gripper (40), and the cell gripper (50) is provided to be linearly movable with respect to the coupling gripper (40). The maximum separation distance and proximity distance through such linear movement may be preset.

A linear moving device (60) or a linear actuator may be provided for linear movement of the cell gripper (50). The linear moving device (60) may move the cell gripper (50) through driving.

The linear moving device (60) may be provided in various forms, and may be formed by comprising a linear motor.

In this example, a hydraulic cylinder-type linear moving device (60) comprising an actuator body (61) and a piston (62) may be provided. The actuator body (61) may be coupled and fixed to the coupling gripper (40), and one end of the piston (62) may be coupled to the cell gripper (50). Therefore, if the piston (62) is driven to extend, the piston (62) pushes the cell gripper (50), and consequently, the interval between the cell gripper (50) and the pouch gripper (30) narrows. Conversely, if the piston (62) is driven to contract, the piston (62) pulls the cell gripper (50), and consequently, the interval between the cell gripper (50) and the pouch gripper (30) increases. The maximum and minimum intervals between the cell gripper (50) and the pouch gripper (30) may be preset through separation distance specifications of the piston (62).

The shape of the cell gripper (50) may be the same as the shape of the pouch gripper (30). That is, the extension portion (51) of the cell gripper (50) may be formed in the same manner as the extension portion (31) of the pouch gripper (30). Then, the cell gripper (50) may also be formed in the fork shape. At this time, the cell gripper (50) may be provided to be overlapped with the pouch gripper (30) up and down.

Specifically, it is preferable that the extension portion (31) of the pouch gripper (30) and the extension portion (51) of the cell gripper (50) are overlapped up and down. This means that the support points or support lines of the pouch (5) and the electrode assembly (1) fixed between the pouch gripper (30) and the cell gripper (50) may be coincided with each other. That is, it means that in a state where the electrode assembly (1) is inserted into the accommodation portion (5a) of the pouch (5), both of the pouch (5) and the electrode assembly (1) may be pressed and fixed up and down through the same support points or support lines. Therefore, it is possible to prevent damage to the electrode assembly in advance during the moving process after the insertion process.

Meanwhile, through the features of the fork-shaped cell gripper (50), the cell gripper (50) may move the electrode assembly (1) while easily supporting the electrode assembly from the bottom.

According to this example, it may comprise a gripper moving device (10) capable of moving and rotating the gripper (20) integrally. The gripper moving device may be connected to a coupling portion (41) provided in the coupling gripper (40), thereby moving, and rotating the coupling gripper (40).

The gripper moving device (10) may be a multi-jointed robot. The multi-jointed robot may comprise a plurality of arms (11), and a terminal (12) may be provided on the last arm. The gripper moving device (10) may move the terminal (12) along six axes. That is, it may perform three-axis translational movement in the up, down, left, right, forward, and backward, and three-axis rotational movement in the x, y, and z axes.

The gripper moving device (10) may move and rotate the gripper (20) with a very high degree of freedom based on a support portion (13).

Various stations may be provided nearby based on the gripper moving device (10). First, a pouch station where a pouch is formed, and then placed, an electrode station where an electrode assembly, in which the manufacture is completed, is placed, and an assembly station where an electrode assembly, in which an insertion process is completed, and a pouch are placed may be provided.

A unit pouch where the forming process of the pouch is completed may be provided at the pouch station. An electrode assembly where the manufacturing process of the electrode assembly is completed may be provided at the electrode station. A secondary battery where the electrode assembly is inserted into the accommodation portion of the pouch and is preassembled may be provided at the assembly station. Thereafter, a folding process of the pouch, an electrolyte filling process, and a sealing process, and the like may be sequentially performed.

Here, the gripper moving device (10) may allow for the manufacturing process of the pouch-type secondary battery to be performed continuously and efficiently while moving between a plurality of stations. Particularly, according to this example, the station (7) illustrated in Figure 2, i.e., the station where the insertion process is performed, may be omitted. This is because the insertion process may be performed through driving of the gripper (20) itself without being performed in a separate station. That is, the insertion process may be performed in the gripper itself moving along the preset path, rather than in a station fixed at a certain location.

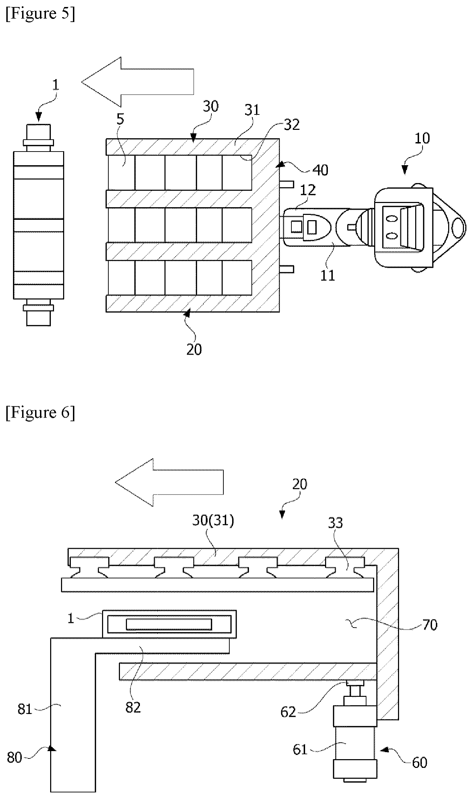

Hereinafter, the operation of the manufacturing device according to this example, and the manufacturing method according to this example will be described in detail with reference to Figures 5 to 9.

As illustrated in Figure 5, in a state of first adsorbing the pouch (5), the gripper moving device (10) moves the gripper (20) to the electrode station where the electrode assembly (1) is located. That is, the gripper (20) is brought close to the electrode assembly (1). This may be referred to as forward driving through the gripper moving device (10).

As illustrated in Figure 6, through the forward movement of the gripper moving device (10), the electrode assembly (1) is inserted and positioned in the internal space, i.e., the open space (70), of the gripper (20). In this instance, the pouch gripper (30) adsorbs the pouch so that the accommodation portion of the pouch faces downward. Then, the pouch gripper (30) is positioned apart from the upper portion of the electrode assembly (1). In addition, the cell gripper (50) is positioned apart from the lower portion of the electrode assembly (1).

The electrode station (80) may be formed by comprising a support (81) and an extension portion (82). The extension portion (82) may be provided to extend from the upper portion of the support (81) toward the gripper (20).

The forward movement of the gripper (20) may be performed so that the electrode assembly (1) and the accommodation portion (5a) are coincided with each other up and down. That is, the entire gripper (20) may be moved so that accurate alignment is performed.

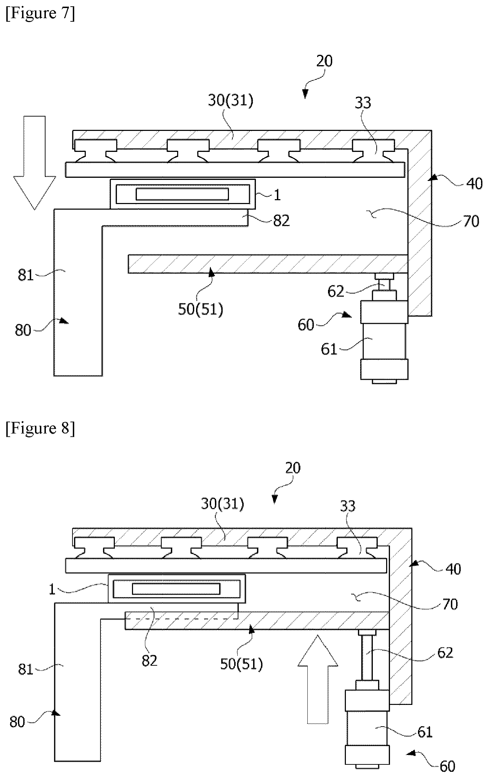

As illustrated in Figure 7, an insertion process in which the electrode assembly (1) is inserted into the gripper (20), and then the electrode assembly (1) is inserted into the accommodation portion may be performed.

At this time, the gripper moving device (10) may allow the upper portion of the electrode assembly (1) to be inserted and seated in the accommodation portion (5a) by moving the pouch gripper (30) downward. More specifically, the entire gripper may be moved downward. In this instance, the self-weight of the electrode assembly (1) is still supported by the extension portion (82) from the bottom of the electrode assembly (1). However, only a weak force pressing the pouch up and down may be applied to the upper surface of the electrode assembly (1). Therefore, in the assembly process, it is possible to exclude damage to the electrode assembly (1).

As illustrated in Figure 8, if the insertion process is completed, the cell gripper (50) may rise. That is, in a state where the pouch gripper (30) is stopped, the cell gripper (50) may rise. At this time, the movement of the gripper (20) through the gripper moving device (10) may be stopped, and the cell gripper (50) may move through the linear moving device (60).

As the cell gripper (50) rises, the electrode assembly (1) and the pouch (5) are fixed between the cell gripper (50) and the pouch gripper (30). At this time, the cell gripper (50) may move the electrode assembly (1) upward so that the electrode assembly (1) rises with respect to the extension portion (82). That is, in a state where the electrode assembly (1) and the pouch (5) are fixed between the cell gripper (50) and the pouch gripper (30), the entire gripper (20) may escape from the electrode station (80). Of course, the entire gripper (20) may also rise, and then move backward. That is, as illustrated in Figure 8, after inserting the electrode assembly (1) into the pouch (5) through the gripper (20), the gripper moving device (10) may move backward.

Therefore, after the linear moving device (60) is driven to fix the electrode assembly (1) and the pouch (5) together with the gripper (20), the gripper (20) may be separated from the electrode station (80) through the driving of the gripper moving device (10).

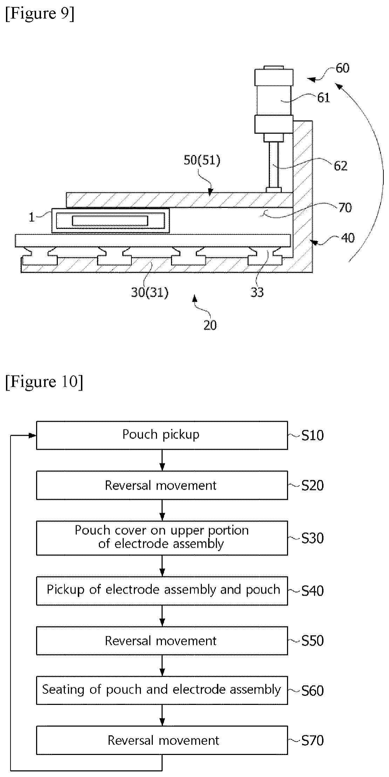

Thereafter, the entire gripper (20) may rotate to be reversed up and down. As illustrated in Figure 9, the electrode assembly (1) may be converted into a form inserted into the accommodation portion at the top of the pouch (5) through the up and down reversal rotation of the gripper.

When the entire gripper (20) reversely rotates up and down, the electrode assembly (1) and the pouch (5) are fixed up and down by the gripper (20), so that the electrode assembly (1) and the pouch (5) may be stably fixed and supported by the gripper (20) in a state of close contact with each other during the reversal rotation and even upon the reversal rotation completion. This reversal rotation may be performed through the gripper moving device (10). Particularly, the gripper (20) may rotate reversely with respect to the gripper moving device (10). By this reversal rotation, it has an appearance that the pouch (5) is positioned at the bottom and the electrode assembly (1) is inserted and seated at the top. That is, finally, it has an appearance that the insertion process as illustrated in Figure 2 is completed.

Meanwhile, thereafter, the folding process may be performed in a state where the pouch (5) is positioned at the bottom and the electrode assembly (1) is inserted at the top. Therefore, the gripper (20) as illustrated in Figure 9 may move to the assembly station to seat the pouch (5) and the electrode assembly (1), in which the insertion process is completed, on the assembly station.

Specifically, the linear moving device (60) may be driven so that the gripper (20) moves to the assembly station, and then the cell gripper (50) returns to its original position. That is, only the cell gripper (50) may rise based on the standard as illustrated in Figure 9. Thereafter, as the entire gripper (20) descends from the insertion station, the pouch (5) and the electrode assembly (1) may be seated on the insertion station. At this time, the insertion station is not illustrated, but may have a structure identical to or like that of the electrode station (80) as illustrated in Figure 8. That is, through a structure intersecting each other in a fork shape, interference of both may be excluded, and the target, i.e., the electrode assembly (1) and the pouch (5) may be seated on the folding station.

Thereafter, the folding process may be performed at the assembly station, and to adsorb the pouch in the appearance as shown in Figure 9, the gripper (20) may be moved. That is, it moves to the pouch station where the pouch in which the forming process is completed is seated, and moves from the bottom to the top so that the lower surface of the pouch where the accommodation portion is formed upward is adsorbed, thereby adsorbing the pouch. Thereafter, the gripper (20) may be escaped from the pouch station to be reversely rotated up and down again. The gripper appearance in this instance is illustrated in Figure 5 or Figure 6. That is, the gripper (20) is in a state where the pouch is adsorbed and fixed so that the accommodation portion faces downward.

Thereafter, the gripper (20) moves to the electrode station (80) again to perform the insertion process of the electrode assembly (1) and the pouch.

As described above, the manufacturing device comprising the gripper (20) and the gripper moving device (10) can be very effectively used in the manufacturing process of the pouch-type secondary battery through the six-axis movement of the gripper (20). That is, through the gripper (20) and the gripper moving device (10), the up and down reversal after adsorption of the formed pouch, the up and down reversal after insertion of the pouch and the electrode assembly, and the movement of the pouch and the electrode assembly, in which the insertion process is completed, to the assembly station can be performed sequentially and continuously. At this time, since the self-weight of the electrode assembly (1) is always supported from the bottom or closely supported up and down, it is possible to prevent damage to the electrode assembly (1) due to the self-weight of the electrode assembly (1) in advance. Then, since the dropping of the electrode assembly (1) does not occur in the insertion process, it is possible to prevent damage to the electrode assembly (1) due to the drop impact in advance.

Then, the gripper (20) is moved using a 6-axis robot with a very high degree of freedom, for example, a collaborative robot, so that a manufacturing device and a manufacturing method, which are easier, more compact, and easier to control, can be provided.

Finally, the operation sequence of the gripper as the end effector of the multi-jointed robot, and the multi-jointed robot as one example of the gripper moving device (10) is explained as follows.

First, the robot moves the gripper to a pouch station equipped with a unit pouch in which an accommodation portion is formed, and then adsorbs the pouch. In this instance, the gripper (20) has an appearance in which the pouch gripper (30) is positioned at the bottom of the cell gripper (50). Therefore, the pouch gripper (30) adsorbs the pouch at the bottom of the pouch, and then the gripper (20) is separated from the pouch station by lifting of the entire gripper (20).

Next, the robot moves the gripper adsorbing the pouch to the top of the electrode assembly. That is, the gripper moves to the electrode station equipped with the electrode assembly. During the movement, the gripper reversely moves up and down, where the gripper (20) has an appearance in which the pouch gripper (30) is positioned on the top of the cell gripper (50).

Next, the robot descends the gripper to cover the electrode assembly with the pouch. In this instance, the top of the electrode assembly is inserted into the accommodation portion of the pouch.

Next, the electrode assembly and the pouch are picked up through the cell gripper. At this time, in a state where the pouch gripper (30) is positioned at the top and the cell gripper (50) is positioned at the bottom, the cell gripper (50) moves closer with respect to the pouch gripper (30), whereby the electrode assembly and the pouch may be fixed between both grippers. Thereafter, the gripper (20) is separated from the electrode station by the upward movement of the entire gripper (20) and the driving of the robot.

Next, the robot reverses the gripper 180 degrees, thereby reversing the pouch and the electrode assembly 180 degrees. This reversal can be performed while the gripper (20) moves from the electrode station to the insertion station. By the reversal, the electrode assembly has an appearance in which it is inserted into the accommodation portion of the pouch from the top to the bottom. Thereafter, in a state where the cell gripper (50) is positioned at the top and the pouch gripper (30) is positioned at the bottom, the cell gripper (50) moves away from the pouch gripper (30), whereby the state of picking up the electrode assembly and the pouch between both grippers can be released.

Next, the gripper (20) moves from the top of the assembly station to the bottom to seat the pouch and the electrode assembly on the assembly station, whereby all the insertion process can be completed. Of course, thereafter, the gripper (20) moves to the pouch station again.

According to this example, the insertion process of inserting the electrode assembly into the pouch can be performed through the reverse gripper (20).

The process for manufacturing a pouch-type secondary battery may comprise an electrode process, a pouch process, an insertion process, and an assembly process.

The electrode process may comprise a process of manufacturing a positive electrode and a negative electrode and manufacturing an electrode assembly. The pouch process may comprise a process of manufacturing a unit pouch from a pouch roll and forming an accommodation portion, into which an electrode assembly is inserted, on the unit pouch.

The electrode process and the pouch process may each be performed inline.

The electrode assembly manufactured in the electrode process may be fed into an electrode station at 1 pitch intervals. That is, the electrode assembly may be fed into the electrode station through an LMS (linear movement system).

The unit pouch manufactured in the pouch process may be fed into a pouch station at 1 pitch intervals. That is, the unit pouch may be fed into the pouch station through an LMS.

The pouch and the electrode assembly, in which the insertion process that the electrode assembly is inserted into the accommodation portion of the pouch is completed, may be positioned at an assembly station, and then the assembly process may be performed through an LMS. The assembly process may comprise detailed processes such as pouch folding, top sealing, electrolyte injection, degassing, and main sealing. Thereafter, the manufacture of the pouch-type secondary battery may be completed through a formation process and an inspection process.

In this example, the gripper moving device (10) may be provided so that the gripper (20) moves between the pouch station, the electrode station, and the assembly station. By increasing the length of the robot arm, all three stations may be covered by a single robot.

As illustrated in Figure 10, the insertion process may be composed of detailed steps.

First, the pouch may be picked up (S10) from the pouch station through the gripper (20). At this time, the pouch may be picked up by adsorbing the lower surface of the pouch using the gripper. The pickup of the pouch may be performed at the pouch station.

The picked-up pouch may be moved to the electrode station. At this time, the gripper (20) may be moved reversely (S20). The gripper (20) covers the pouch on the upper part of the electrode assembly at the electrode station, whereby the pouch may cover the electrode assembly (S30). In this instance, the upper portion of the electrode assembly is inserted into the accommodation portion of the pouch.

In a state where the pouch and the electrode assembly are in close contact with each other, the gripper (20) may pick up (S40) both. The covering (S30) and the pickup (S40) may be performed at the electrode station.

The picked-up pouch and the electrode assembly may be moved to the assembly station. At this time, the gripper (20) may be moved reversely (S50). By this reversal, an appearance in which the electrode assembly is inserted into the upper portion of the pouch is formed.

The gripper (20) may seat the pouch and the electrode assembly on the assembly station (S60). As a result, the insertion process of the pouch and the electrode assembly may be completed.

Thereafter, the gripper (20) may be moved to the pouch station for pouch pickup while performing the reversal movement (S70) again.

Therefore, as the gripper (20) moves between the three stations, it is possible to perform the insertion process continuously and automatically. In addition, while the gripper moves between stations, the reversal movement of the gripper may be simultaneously performed, whereby it is possible to exclude the time required for the reversal movement.

The technical problems to be solved can be effectively achieved through the manufacturing device and the manufacturing method according to the above-described examples.

### Industrial Applicability

It is described in the Detailed Description of Invention.

## Claims

1. A pouch-type battery manufacturing method comprising:
a pouch pickup step of picking up a pouch, in which an accommodation portion for inserting an electrode assembly is formed, using a gripper;
a pouch cover step of moving the pouch downward to an upper portion of the electrode assembly using the gripper to insert the upper portion of the electrode assembly into the accommodation portion;
an assembly pickup step of picking up the pouch and the electrode assembly together using the gripper; and
a seating step of seating the pouch and the electrode assembly in an assembly station in a state where the electrode assembly is inserted into the accommodation portion of the pouch from an upper portion of the pouch by reversely moving the gripper up and down.

2. The pouch-type battery manufacturing method according to claim 1,
**characterized in that** the up and down reversal movement of the gripper is performed between the seating step and the pouch pickup step and between the pouch pickup step and the pouch cover step.

3. The pouch-type battery manufacturing method according to claim 1 or 2,
**characterized in that** the pouch pickup step is performed at a pouch station into which the pouch is introduced, and the pouch cover step is performed at an electrode station into which the electrode assembly is introduced.

4. The pouch-type battery manufacturing method according to claim 3,
**characterized in that** the gripper is provided to be movable and reversely movable between the pouch station, the electrode station, and the assembly station.

5. The pouch-type battery manufacturing method according to claim 4,
**characterized in that** the gripper is an end effector provided at a terminal of a multi-jointed robot.

6. The pouch-type battery manufacturing method according to claim 3,
**characterized in that** in the pouch pickup step, the pouch is adsorbed through a vacuum adsorption nozzle provided on a pouch gripper of the gripper.

7. The pouch-type battery manufacturing method according to claim 6,
**characterized in that** in the assembly pickup step, an electrode gripper of the gripper supporting the electrode assembly from a lower portion is moved in a direction of the pouch gripper to support the pouch and the electrode assembly up and down.

8. A pouch-type battery manufacturing device comprising a multi-jointed robot and a gripper provided at a terminal of the multi-jointed robot, **characterized in that**
the gripper comprises:
a pouch gripper adsorbing a pouch in which an accommodation portion is formed;
a cell gripper provided to be spaced apart from the pouch gripper up and down so that an electrode assembly is inserted into the gripper and supporting a lower surface of the electrode assembly; and
a coupling gripper connecting the pouch gripper and the cell gripper and provided to be coupled with the terminal of the multi-jointed robot, and
the gripper is reversed up and down after the electrode assembly is inserted into the accommodation portion of the pouch between the pouch gripper and the cell gripper and fixed.

9. The pouch-type battery manufacturing device according to claim 8,
**characterized in that** the pouch gripper adsorbs the pouch so that the accommodation portion points downward, and descends, whereby the electrode assembly is inserted into the accommodation portion from bottom to top.

10. The pouch-type battery manufacturing device according to claim 8,
**characterized in that** the cell gripper is provided to be movable with respect to the coupling gripper so that an up and down separation interval is increased or decreased from the pouch gripper.

11. The pouch-type battery manufacturing device according to claim 10,
**characterized in that** the pouch gripper is fixed with respect to the coupling gripper.

12. The pouch-type battery manufacturing device according to claim 10,
**characterized in that** the pouch gripper and the cell gripper are provided in parallel.

13. The pouch-type battery manufacturing device according to claim 10,
**characterized in that** the gripper comprises a linear moving device driving the cell gripper to move.

14. The pouch-type battery manufacturing device according to claim 10,
**characterized in that** the gripper is moved integrally with the movement of the terminal of the multi-jointed robot.

15. The pouch-type battery manufacturing device according to claim 14,
**characterized in that** the multi-jointed robot is provided to perform
an insertion drive for moving the electrode assembly to be positioned inside the gripper;
a seating drive for moving the pouch to be seated on an upper surface of the electrode assembly; and
a reverse drive for reversing the gripper up and down.

16. The pouch-type battery manufacturing device according to claim 8,
**characterized in that** the pouch gripper comprises a plurality of extension portions having a predetermined interval from each other and extended from the coupling gripper.

17. The pouch-type battery manufacturing device according to claim 16,
**characterized in that** a plurality of adsorption nozzles is provided in an extension length direction of the plurality of extension portions.

18. The pouch-type battery manufacturing device according to claim 17,
**characterized in that** the cell gripper comprises a plurality of extension portions having a predetermined interval from each other and extended from the coupling gripper.

19. The pouch-type battery manufacturing device according to claim 18,
**characterized in that** the pouch-type battery manufacturing device comprises an electrode station on which the electrode assembly is supported before the electrode assembly is coupled with the gripper,
the electrode station comprises a plurality of extension portions spaced apart from each other at a predetermined interval along a length direction of the electrode assembly, and
the extension portion of the cell gripper is formed to be penetrable between the extension portions of the electrode station up and down.

20. The pouch-type battery manufacturing device according to claim 8,
**characterized in that** the gripper is opened in the left, right, and front directions so that the pouch and the electrode assembly are insertable inside the gripper.
